# EUROPÄISCHE PATENTANMELDUNG

(11) **EP 0 897 857 A2**
(43) Veröffentlichungstag der Anmeldung: **24.02.1999**
(21) Anmeldenummer: 98111823.5
(22) Anmeldetag: 26.06.1998
(51) Int. Cl.: B62J 1/08, B62K 21/18

(54) **Verstellvorrichtung für einen Lenker, Sattel und dergleichen Fahrradelement**

(30) Priorität: 16.08.1997 DE 19736700
(71) Anmelder: Dr.Ing.h.c. F. Porsche Aktiengesellschaft, 70435 Stuttgart (DE)
(72) Erfinder: Scheffer, Lutz, 75177 Pforzheim (DE)

(57) **Zusammenfassung**

Bei einer Verstellvorrichtung für einen Lenker sowie einen Sattel ist zwischen Armen (4,5) eines Parallelogrammgestänges ein Verstellelement angeordnet. Dieses Verstellelement besteht einerseits aus einer an einem Arm gelagerten Gewindehülse (13) und einer am anderen Arm gelagerten Gewindespindel (14), die in die Gewindehülse einschraubbar ist und beim Verdrehen dieser Gewindespindel eine Verstellung der beiden Arme um Lagerbolzen eines Befestigungselementes erfolgt.

## Beschreibung

Die Erfindung bezieht sich auf eine Verstellvorrichtung für einen Lenker, Sattel und dergleichen, nach dem Oberbegriff des Patentanspruches 1.

Aus der DE 63 669 ist ein verstellbarer Sattel für ein Fahrrad bekannt, der einen Sitzständer als Parallelogramm mit zwei parallelen Armen aufweist. Dieser Sitzständer ist in zwei Stellungen verschwenkbar.

Die Aufgabe der Erfindung besteht darin, eine Vorrichtung zum Verstellen eines Sattels, eines Lenkers oder dergleichen an einem Fahrrad zu schaffen, die aus wenigen Bauteilen besteht, robust ausgebildet und einfach zu bedienen ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß mittels eines Verstellelements zwischen zwei parallel angeordneten Armen eines Gestänges zur Aufnahme eines Lenkers oder eines Sattels, diese Fahrradelemente in ihrer Position verändert werden können, so daß eine Anpassung an den Benutzer des Fahrrades in optimaler Weise vorgenommen werden kann.

Die Arme des Gestänges sind zueinander beabstandet und parallel angeordnet und in der Weise in einem Aufnahmeelement und einem Befestigungselement über Bolzen gelagert, daß das Verstellelement eine Verschwenkbarkeit der Arme - in Fahrtrichtung des Fahrrades gesehen - nach vorne und hinten möglich macht.

Die Höhe des Lenkers sowie des Sattels kann entsprechend durch das Verstellelement verändert werden.

Dieses Verstellelement, hauptsächlich bestehend aus einer Gewindehülse und einer einschraubbaren Gewindespindel, bewirkt eine stufenlose Verstellung des Gestänges und somit des Sattels und des Lenkers.

Die Handhabe an der Gewindespindel zur Verstellung ist in der Weise angeordnet, daß eine Verstellung auch während der Fahrt vorgenommen werden kann.

Die Verstellvorrichtung besteht aus einem Leichtmetall und kann aus gefrästen Teilen oder Gußteilen bestehen.

Ein Ausführungsbeispiel der Erfindung ist in den Zeichnungen dargestellt und wird im folgenden näher beschrieben.

Es zeigen
- Fig. 1: eine Anordnung von Verstellvorrichtungen an einem Sattel und einem Lenker eines Fahrrades,
- Fig. 2: eine Seitenansicht der Verstellvorrichtung für einen Lenker,
- Fig. 2a: eine Seitenansicht der Verstellvorrichtung für einen Sattel,

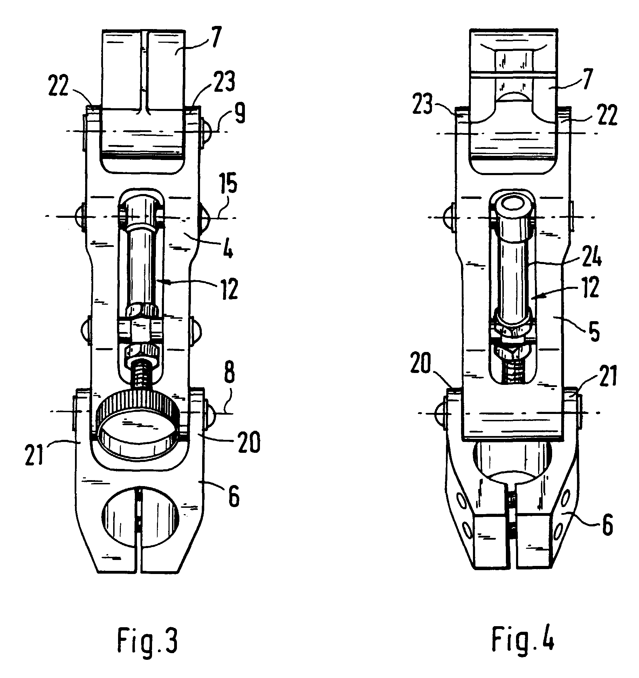

- Fig. 3: eine Rückansicht der Verstellvorrichtung,
- Fig. 4: eine Vorderansicht der Verstellvorrichtung und
- Fig. 5: eine Draufsicht auf ein Verstellelement mit einer Gewindehülse und einer Gewindespindel mit Handhabe.

Die Verstellvorrichtung 1 und 1a für einen Lenker 3 und einen Sattel 2 eines Fahrrades besteht im wesentlichen aus jeweils zwei Armen 4, 5 eines Gestänges, die parallel oder annähernd parallel zueinander angeordnet sind. Über ein Befestigungselement 6 und über ein Aufnahmeelement 7 sind die beiden Arme 4, 5 auf Lagerbolzen 8, 9 schwenkbar gelagert. Über das Befestigungselement 6 ist die Verstellvorrichtung 1 mit einem Lenkerrohr 10 und die Verstellvorrichtung 1a mit einem Sattelrohr 11 verbunden. Das Aufnahmeelement 7 der Verstellvorrichtung 1 ist wiederum unmittelbar mit dem Lenker 3 und das Aufnahmeelement 7 der Verstellvorrichtung 1a ist mit dem Sattel 2 verbunden.

Die Positionsnummern für die Verstellvorrichtungen 1 und 1a sind gleich, das sich bis auf das Befestigungselement 6 um annähernd gleiche Bauteile handelt.

Das Befestigungselement 6 weist zur schwenkbaren Aufnahme der Arme 4, 5 gegenüberstehende Schenke 20, 21 auf, zwischen denen das Befestigungselement angeordnet und über den Bolzen 8 schwenkbar gehalten wird. Das Aufnahmeelement 7 ist zwischen gegenüberstehenden Schenkeln 22, 23 der Arme 4, 5 aufgenommen und über den Bolzen 9 schwenkbar gehalten.

Ein Verstellelement 12 ist zwischen den beiden Armen 4, 5 angeordnet und mit diesem verbunden. Hierzu weisen die Arme 4, 5 längliche Ausnehmungen 24 auf. Das Verstellelement 12 besteht im wesentlichen aus einer Gewindehülse 13 und einer Gewindespindel 14, die miteinander in Eingriff stehen.

Die Gewindehülse 13 ist auf einem Bolzen 15 im Arm 5 schwenkbar gelagert. Die gegenüberstehende achsgleich angeordnete Gewindespindel 14 ist in einer Bohrung 17 eines Bolzens 16 durchgesteckt gehalten und mit dem Bolzen 16 schwenkbar im Arm 4 gelagert. Die Gewindespindel 14 ist zu beiden Seiten des Bolzens 16 mit festsitzenden Muttern 18, 19 als Widerlager gekontert angeordnet.

Das Verstellelement 12 kann auch in anderer Weise an der Verstellvorrichtung 1, 1a angeordnet sein und eine andere Lage einnehmen. So kann der Bolzen 15 für die Gewindehülse 13 auch am Arm 4 vorgesehen werden. In diesem Fall ist dann der Bolzen 16 im Arm 5 angeordnet.

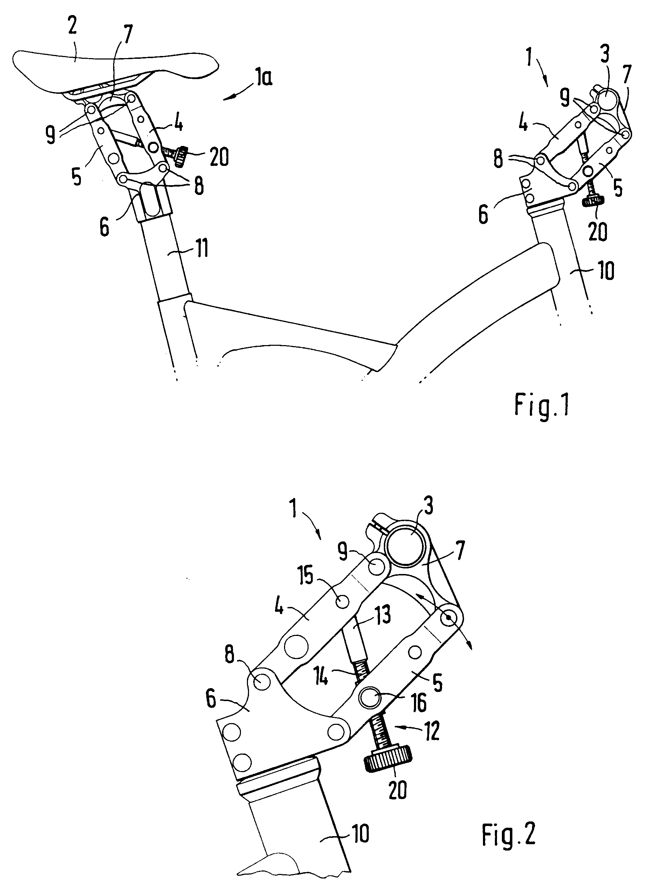

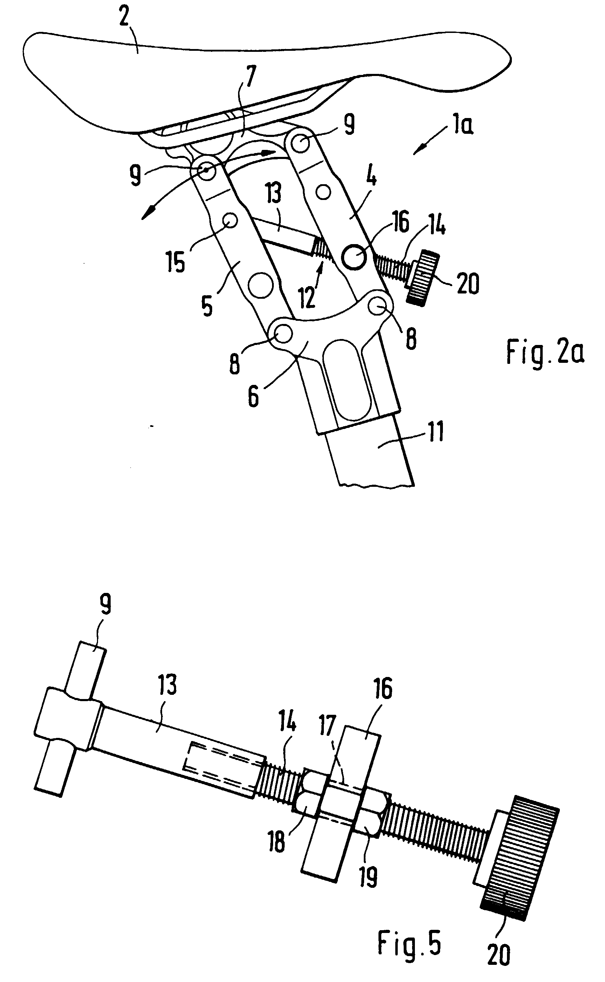

Wie insbesondere aus den Fig. 2 und 2a zu erkennen ist, können durch ein Verdrehen der Gewindespindel 14 über die Handhabe 20 die Arme 4, 5 in Pfeilrichtung nach vorne und hinten verstellt werden. Diese Verstellung ist über die Gewindespindel 14 stufenlos.

Das Aufnahmeelement 6 der Verstellvorrichtung 1 wird mit dem Lenkerrohr 10 verbunden. Hierzu weist das Befestigungselement 6 eine entsprechende Bohrung auf, und ein Festspannen erfolgt über Schrauben. Das Aufnahmeelement 6 für den Sattel 2 sowie für den Lenker 3 ist aus einem Segment bestehend und mit einer querverlaufenden Bohrung versehen. Ein Festspannen mit dem Lenker 3 und dem Sattel 2 erfolgt mittels Befestigungsschrauben.

## Patentansprüche

1. Verstellvorrichtung für einen Lenker, Sattel und dergleichen Fahrradelement über ein Gestänge, das mit einem Ende am Fahrradrahmen befestigt ist und das mit seinem anderen Ende das Fahrradelement haltend aufnimmt, dadurch gekennzeichnet, daß das Gestänge aus zwei parallel und beabstandet zueinander angeordneten Armen (4, 5) besteht, die in einem Befestigungselement (6) und einem Aufnahmeelement (7) jeweils auf Bolzen (8, 9) verschwenkbar gelagert sind und zwischen den Armen (4, 5) ein Verstellelement (12) angeordnet ist.

2. Verstellvorrichtung nach Anspruch 1, dadurch gekennzeichnet, daß das Befestigungselement (6) zur schwenkbaren Aufnahme der Arme (4, 5) gegenüberstehende Schenkel (20, 21) aufweist, wobei das Aufnahmeelement (7) zwischen gegenüberstehenden Schenkeln (22, 23) der Arme (4, 5) aufgenommen ist.

3. Verstellvorrichtung nach den Ansprüchen 1 oder 2, dadurch gekennzeichnet, daß die Arme (4, 5) zwischen den Bolzen (8, 9) jeweils längliche Ausnehmungen (24) aufweisen, in denen das Verstellelement (12) teilweise mit seinen Lagerungen (15, 16) angeordnet ist.

4. Verstellvorrichtung nach den Ansprüchen 1, 2 oder 3, dadurch gekennzeichnet, daß das Verstellelement (12) aus einer in eine Gewindehülse (13) ein- und ausschraubbaren Gewindespindel (14) besteht, die endseitig eine Handhabe (20) aufweist.

5. Verstellvorrichtung nach einem oder mehreren der vorhergehenden Ansprüche, dadurch gekennzeichnet, daß die Gewindehülse (13) verschwenkbar auf dem Querbolzen (9) im Arm (4 oder 5) gehalten ist und die Gewindespindel (14) frei drehbar in einer Bohrung (17) des Bolzens (16) angeordnet ist und auf diesem zwischen festgesetzten Muttern (18, 19) in positionierter Lage gehalten wird.

6. Verstellvorrichtung nach einem oder mehreren der vorhergehenden Ansprüche, dadurch gekennzeichnet, daß die Arme (4, 5) sowie das Befestigungs- und Aufnahmeelement (6, 7) aus einem Leichtmetall bestehen.
